# EUROPEAN PATENT SPECIFICATION

(11) **EP 1 677 924 B1**
(45) Date of publication and mention of the grant of the patent: **05.12.2007**
(21) Application number: 04775012.0
(22) Date of filing: 12.10.2004
(51) Int. Cl.: B21D 28/16, B21D 53/14, F16G 5/16

(54) **THE PREVENTION OF FORMATION OF BURRS IN A BLANKING PROCESS OF A TRANSVERSE ELEMENT FOR A PUSH BELT FOR A CONTINUOUSLY VARIABLE TRANSMISSION**
VERHINDERUNG DER BILDUNG VON GRAT IN EINEM STANZPROZESS EINES QUERELEMENTS FÜR EINEN SCHUBRIEMEN FÜR EIN STUFENLOSES GETRIEBE
METHODE PERMETTANT D'EVITER LA FORMATION DE BAVURES DANS UN PROCEDE DE DECOUPAGE AU POINçON D'UN ELEMENT TRANSVERSAL DESTINE A UNE COURROIE D'ENTRAINEMENT POUR UNE TRANSMISSION VARIABLE EN CONTINU

(30) Priority: 14.10.2003 NL 1024530
(43) Date of publication of application: 12.07.2006
(73) Proprietor: ROBERT BOSCH GMBH, 70442 Stuttgart (DE)
(72) Inventor: PRINSEN, Lucas, Hendricus, Robertus, Maria, NL-5175 AC Loon Op Zand (NL)
(74) Representative: Dekker-Garms, Alwine Emilie
(86) International application number: PCT/NL2004/000717
(87) International publication number: WO 2005/035163

(56) References cited:
- EP-A- 1 132 648
- EP-A- 1 287 924
- WO-A-03/072978
- PATENT ABSTRACTS OF JAPAN vol. 2000, no. 02, 29 February 2000 (2000-02-29) & JP 11 309522 A (HONDA MOTOR CO LTD), 9 November 1999 (1999-11-09)
- PATENT ABSTRACTS OF JAPAN vol. 2000, no. 25, 12 April 2001 (2001-04-12) & JP 2001 232424 A (HONDA MOTOR CO LTD), 28 August 2001 (2001-08-28)
- PATENT ABSTRACTS OF JAPAN vol. 2002, no. 05, 3 May 2002 (2002-05-03) & JP 2002 018536 A (YAMAMOTO SEISAKUSHO:KK;NISSAN MOTOR CO LTD), 22 January 2002 (2002-01-22)
- PATENT ABSTRACTS OF JAPAN vol. 013, no. 077 (M-801), 22 February 1989 (1989-02-22) & JP 63 277703 A (KOBE STEEL LTD), 15 November 1988 (1988-11-15)

## Description

The present invention relates to a method for forming a transverse element which is designed to be part of a push belt for a continuously variable transmission, which transverse element comprises two main body surfaces and a circumferential surface extending between the main body surfaces,
wherein, during a blanking movement, the transverse element is blanked out of basic material by applying a cutting member, a supporting member and a mould having a receiving space for receiving the transverse element to be blanked, the supporting member and an end of the cutting member;
wherein, during a blanking movement, the transverse element to be blanked is clamped between the cutting member and the supporting member, wherein the cutting member, the transverse element to be blanked and the supporting member on the one hand, and the mould on the other hand, are moved with respect to each other.

A method, mould and transverse element as per the preambles of claims 1, 5 and 11 is known from WO-A-03/072978.

A push belt for a continuously variable transmission is generally known. Usually, such a push belt comprises two endless, ribbon-like carriers shaped like a closed loop for carrying a relatively large number of transverse elements. The transverse elements are movably arranged along the entire circumference of the carriers, wherein they are able to transmit forces which are related to a movement of the push belt.

In the following description of the transverse element, the mentioned directions refer to the situation in which the transverse element is part of the push belt. A longitudinal direction of the transverse element corresponds to a circumferential direction of the push belt. A vertical transverse direction of the transverse element corresponds to a radial direction of the push belt. A horizontal transverse direction of the transverse element corresponds to a direction perpendicular to both the longitudinal direction and the vertical transverse direction. The indication of any transverse element as subsequent transverse element or previous transverse element with respect to an adjacent transverse element is related to a direction of movement of the push belt.

In the horizontal transverse direction, the transverse element is provided with recesses for receiving the carriers, on opposite sides. For the purpose of supporting the carriers, the transverse element comprises carrying surfaces. In the horizontal transverse direction, for the purpose of contact between the transverse element and pulley sheaves of a pulley of a continuously variable transmission, the transverse element is provided with pulley sheave contact surfaces, on opposite sides, which are divergent in the direction of the carrying surfaces. The terms "top" and "bottom", which are hereinafter applied, are related to the direction of divergence; this is defined as being from bottom to top.

In the vertical transverse direction, from bottom to top, the transverse element comprises successively a basic portion, a neck portion and a top portion, wherein, in the horizontal transverse direction, the dimensions of the neck portion are relatively small. The basic portion comprises the carrying surfaces and the pulley sheave contact surfaces. In the push belt, the basic portion is located at the side of the inner circumference of the push belt, whereas the top portion is located at the side of the outer circumference of the push belt.

The transverse element has two main body surfaces, namely a front surface and a back surface, which extend substantially parallel with respect to each other, substantially perpendicular to the longitudinal direction. At least a part of the front surface of the transverse element is designed to abut against at least a part of the back surface of a subsequent transverse element in the push belt, whereas at least a part of the back surface of the transverse element is designed to abut against at least a part of the front surface of a previous transverse element in the push belt.

A circumferential surface, of which the carrying surfaces and the pulley sheave contact surfaces are part, extends between the two main body surfaces. Another surface that is part of the circumferential surface is a bottom surface extending between the two pulley sheave contact surfaces, and being located at a bottom side of the transverse element.

By means of a blanking process, the transverse element is manufactured out of basic material shaped like a sheet. In the blanking process, a cutting member and a supporting member are applied, wherein the cutting member is designed to cut the transverse element out of the basic material under the influence of a cutting force, and wherein the supporting member is designed to support the transverse element by a supporting force during the blanking process. The circumference of both the supporting surface and the cutting surface is substantially equal to the circumference of the transverse element. During the blanking process, the cutting member penetrates the basic material under the influence of pressure, wherein a mutual movement of transverse element to be blanked and the basic material is allowed. At that moment, the transverse element to be blanked is clamped between the cutting member and the supporting member.

Furthermore, in the blanking process, a mould is applied, which is provided with a receiving space for receiving the transverse element to be blanked, the supporting member and an end of the cutting member. The inner circumference of the receiving space substantially corresponds to the circumference of the cutting member, the supporting member, as well as the transverse element to be blanked, so that the receiving space is capable of receiving the transverse element to be blanked, practically without any play.

The mould has a mould surface for supporting the basic material surrounding the transverse element to be blanked. The mould surface and the inner surface of the receiving space are connected to each other, through a circumferential edge. In order to guarantee that a good surface quality of the circumferential surface of the transverse element is obtained during the blanking process, the circumferential edge is bevelled, i.e. a bevel surface is located between the mould surface and the inner surface of the receiving space, where otherwise a sharp edge would be present between the mould surface and the inner surface of the receiving space. The surface quality is related to the roughness of the surface in question. In general, it is true that the rougher the surface, the lower the surface quality.

When the circumferential edge would be sharp, just a portion of the transverse element would be cut loose from the basic material during the blanking process, while another portion of the transverse element would be torn loose from the basic material. It will be clear that a portion that has been torn loose has a relatively bad surface quality. When a mould having a bevelled circumferential edge is applied, the phenomenon of the transverse element tearing loose from the basic material is reduced to a minimum or even totally prevented.

It has appeared in practice that burrs are formed during the blanking process, wherein relatively narrow, loose strips of basic material are meant by the term "burrs". Furthermore, it has appeared that the burrs are mostly formed at the bottom side of the transverse element.

A burr is formed, because in practice, during the blanking process, the position of the cutting member deviates somewhat with respect to the position of the receiving space of the mould. This deviation mostly occurs when a number of transverse elements are simultaneously formed during the blanking process. In such a blanking process, a number of cutting members, a number of supporting members and a mould having a number of receiving spaces are applied, wherein the cutting members are arranged at a fixed distance with respect to each other. Usually, in practice, it happens that the quality of the positioning of the cutting member with respect to the associated receiving space in the mould is different per cutting member. In the case of the cutting member that is relatively badly positioned with respect to the associated receiving space, in other words, in the case of the cutting member of which the position deviates to a large extent from the position of the associated receiving space, a relatively large play is present between the circumference of the cutting member and a transition between the mould surface and the bevel surface, at one side of the cutting member. In the following, the play between the circumference of the cutting member and the transition between the mould surface and the bevel surface will be referred to as cutting play. The relatively large cutting play causes a crack to be formed in the basic material in an early stage of the blanking movement. When, during a later stage of the blanking movement, the position of the cutting member is corrected by the circumferential edge of the mould, so that the cutting member is capable of moving into the receiving space, the basic material is cut through at a transition between the bevel surface and the inner surface of the receiving space. As the place where the basic material is cut through deviates from the place where the crack in the basic material is located, a loose burr is obtained after the basic material has been cut through.

It has appeared that the deviation of the position of the cutting member usually is such that the relatively large cutting play is present at the side of the bottom side of the transverse element to be blanked. The burr that is formed as a consequence of this is cut loose from the bottom surface of the transverse element to be blanked.

In the following, it is assumed that the extent to which the circumferential edge of the mould is bevelled is related to the dimensions of the bevel surface of the mould in a direction substantially parallel to the mould surface, i.e. in a direction substantially perpendicular to the direction of movement of the cutting member during the blanking process or a direction substantially perpendicular to the direction of movement of the transverse element to be blanked during the blanking process. The circumferential edge has a relatively large bevel when the dimension of the bevel surface is relatively large in said direction, whereas the circumferential edge has a relatively small bevel when the dimension of the bevel surface in said direction is relatively small.

In general, it is true that the larger the bevel of the circumferential edge of the mould, the larger the cutting play may be, and the larger the chance of the formation of burrs. Furthermore, it is true that the chance of the formation of burrs increases as the circumferential edge of the mould gets more worn out.

The formation of burrs as such is not a problem. However, when no measures are taken to remove the burrs from the region where the blanking process takes place, there is a large risk of one or more burrs getting pressed into the surface of a next transverse element to be blanked. In the process, the burrs may end up in both one of both main body surfaces and the circumferential surface of the transverse element. It is also possible that the burrs cause scratches to appear on the surface of a transverse element to be blanked.

When the burrs are pressed into the surface of the transverse element, the burrs, at a given moment, may break loose from the surface of the transverse element again, as a result of which a cavity is obtained in the surface. Breaking loose of the burrs may take place during finishing processes, for example during a tumbling process, but may also take place during operation of a push belt in which the transverse element is applied. In particular in the latter case, a reasonable chance exists that the lifespan of the push belt is considerably reduced.

When a carrying surface is damaged by the burrs, and the transverse element is applied in a push belt, there is a reasonable chance that the carrier of the push belt gets damaged, which may lead to breakage of the carrier and failure of the push belt.

It is an objective of the present invention to prevent the formation of burrs during the blanking process of the transverse elements, in particular burrs which, according to the state of the art, are formed at the bottom side of the transverse elements. According to the present invention, the set objective is achieved by reducing the extent to which a portion of the circumferential edge of the mould, at least the portion along which the bottom surface of the transverse elements moves during the blanking process, is bevelled. In the following, this portion will also be referred to as bottom surface contacting portion.

It is an additional objective of the present invention to guarantee that the surface quality of surfaces of which the surface quality needs to be relatively high is not reduced as a result of measures for preventing the formation of burrs. Surfaces for which this is anyhow true are the carrying surfaces. Therefore, according to the present invention, the portions of the circumferential edge of the mould along which the carrying surfaces of the transverse element to be blanked move during the blanking process keep a relatively large bevel. In the following, these portions are also referred to as carrying surface contacting portions.

By reducing the extent to which the bottom surface contacting portion of the circumferential edge of the mould is bevelled on the one hand, and by maintaining the extent to which the carrying surface contacting portions of the circumferential edge of the mould are bevelled on the other hand, it is achieved that during blanking of the transverse elements, the bottom surface of the transverse elements to be blanked is moved along a portion of the circumferential edge having a relatively small bevel, whereas the carrying surfaces of the transverse elements to be blanked are moved along portions of the circumferential edge having a relatively large bevel. In this way, the formation of burrs at the bottom side of the transverse element to be blanked is prevented, so that damage of the surface of the transverse element no longer occurs as a result of such burrs.

Another result is that the obtained surface quality of the bottom surface is lower than in the case of a transverse element that is formed by applying a mould having a bottom surface contacting portion having a relatively large bevel. This is caused by the fact that in the case of a relatively sharp circumferential edge, only a portion of the bottom surface is cut loose from the basic material, while another portion is torn loose from the basic material. The portion that has been torn loose has a lower surface quality. However, the surface quality of the bottom surface of the transverse element does not influence the functioning of the transverse element in a push belt, so that applying in a push belt of transverse elements which are formed through the help of a mould having a relatively sharp bottom surface contacting portion does not have any negative consequences for the lifespan of the push belt.

Since the carrying surfaces of the transverse element to be formed are moved along the carrying surface contacting portions of the mould during the blanking process, which carrying surface contacting portions, according to the present invention, have a relatively large bevel, carrying surfaces having a relatively high surface quality are obtained. This is important, because carrying surfaces having a relatively low surface quality may cause damage to the carriers of a push belt.

Within the scope of the present invention, it is possible that only the bottom surface contacting portion of the mould has a relatively small bevel. In such a case, it may be so that no burrs are cut off from the bottom side of the transverse element to be formed, but it may occur that burrs are formed at other regions of the transverse element to be formed. These burrs are relatively short, so that the chance of damage of the surface of the transverse element is relatively small. In particular, the chance of damage of a carrying surface is relatively small, because relatively small burrs are not capable of bridging the distance between the bottom surface contacting portion and one of the carrying surface contacting portions, for example, when these burrs remain on the mould surface during the blanking process.

Within the scope of the present invention, it is also possible that more portions of the circumferential edge of the mould than the bottom surface contacting portion have a relatively small bevel. In fact, it is true that all portions of the circumferential edge along which, during the blanking process, a portion of the circumferential surface of the transverse element to be blanked for which it is not required to have a high surface quality is moved, may be relatively sharp, without this having any consequences for the functioning of the transverse element in a push belt.

In general, it is realized by the present invention that during the blanking process at least one portion of the circumferential surface of the transverse element to be blanked is moved along a portion of the circumferential edge of the mould having a relatively small bevel, and that the other portion of the circumferential surface of the transverse element to be blanked is moved along a portion of the circumferential edge of the mould having a relatively large bevel. At the portion of the circumferential surface that is moved along the circumferential edge having the relatively small bevel, the formation of burrs is prevented, while the obtained surface quality of the portion in question is relatively low.

The invention is defined in independent claims 1, 5 and 11. The dependent claims describe preferred embodiments of the invention.

The present invention will be explained on the basis of the following description of the invention with reference to the drawing, in which equal reference signs indicate equal or similar components, and in which:
figure 1 diagrammatically shows a side view of a continuously variable transmission having a push belt;
figure 2 shows a front view of a transverse element for a push belt for a continuously variable transmission;
figure 3 shows a side view of the transverse element shown in figure 2;
figure 4 shows a diagrammatical longitudinal section of a blanking area of a blanking device, as well as basic material placed in there;
figure 5a diagrammatically shows a first stage of a blanking movement; figure 5b diagrammatically shows a second stage of a blanking movement; figure 5c diagrammatically shows a third stage of a blanking movement; and figure 5d diagrammatically shows a fourth stage of a blanking movement;
figures 6a to 6c diagrammatically illustrate the formation of a burr during the blanking movement;
figure 7 is a top view of a mould which is applied during the blanking movement, wherein a burr which is present on a mould surface of the mould is shown;
figure 8 is a front view of a transverse element that has been in contact with a burr during the blanking movement;
figure 9 diagrammatically shows a top view of a mould according to a first preferred embodiment of the present invention;
figure 10 diagrammatically shows a longitudinal section of the mould shown in figure 9, along the line A-A in figure 9;
figure 11 diagrammatically shows a top view of a mould according to a second preferred embodiment of the present invention; and
figure 12 diagrammatically shows a longitudinal section of the mould shown in figure 11, along the line B-B in figure 11.

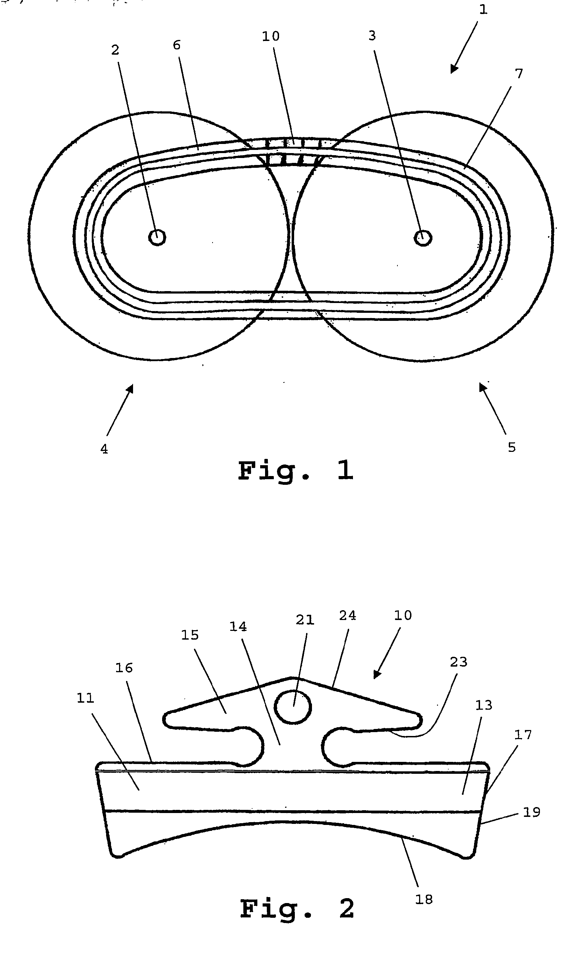

Figure 1 diagrammatically shows a continuously variable transmission, such as for utilization in a motor vehicle. The continuously variable transmission is indicated in general by the reference sign 1.

The continuously variable transmission 1 comprises two pulleys 4, 5 being arranged on separate pulley shafts 2, 3. An endless push belt 6 being shaped like a closed loop is arranged around the pulleys 4, 5, and serves for transmitting torque between the pulley shafts 2, 3. Each of the pulleys 4, 5 comprises two pulley sheaves, wherein the push belt 6 is positioned and clamped between said two pulley sheaves, so that with the help of friction a force may be transmitted between the pulleys 4, 5 and the push belt 6.

The push belt 6 comprises at least one endless carrier 7, which is usually composed of a number of rings. Along the entire length of the carrier 7, transverse elements 10 are arranged, wherein the transverse elements 10 are mutually adjacent to each other and are moveable with respect to the carrier 7 in the circumferential direction. For the sake of simplicity, only a number of these transverse elements 10 is shown in figure 1.

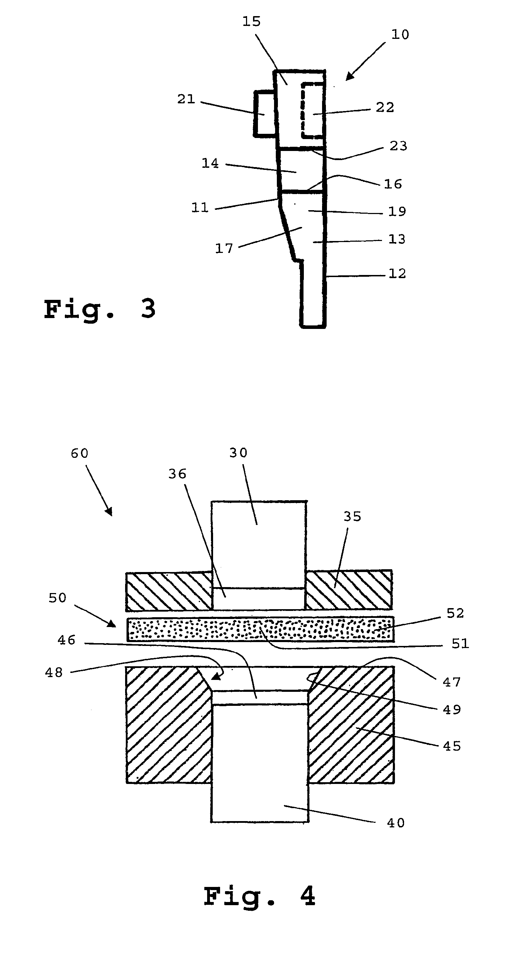

Figures 2 and 3 show a transverse element 10. A front surface of the transverse element 10 is indicated in general by the reference sign 11, whereas a back surface of the transverse element 10 is indicated in general by the reference sign 12. In the following, both the front surface 11 and the back surface 12 are also indicated as main body surface 11, 12. A circumferential surface 19 extends between the main body surfaces 11, 12.

In the vertical transverse direction, the transverse element 10 comprises successively a basic portion 13, a relatively narrow neck portion 14, and a top portion 15 shaped like the tip of an arrow. In the push belt 6, the basic portion 13 is located at the side of the inner circumference of the push belt 6, whereas the top portion 15 is located at the side of the outer circumference of the push belt 6. Furthermore, in a push belt 6, at least a portion of the front surface 11 of the transverse element 10 abuts against at least a portion of the back surface 12 of a subsequent transverse element 10, whereas at least a portion of the back surface 12 of the transverse element 10 abuts against at least a portion of the front surface 11 of a preceding transverse element 10. At the transition to the neck portion 14, the basic portion 13 of the transverse element as shown in figure 2 comprises two carrying surfaces 16 which serve for supporting two carriers 7. Furthermore, the basic portion 13 comprises two pulley sheave contact surfaces 17. When the transverse element 10 moves over the pulley 4, 5, contact between the transverse element 10 and contact surfaces of the pulley sheaves is realized through said pulley sheave contact surfaces 17. A bottom surface extends between the pulley sheave contact surfaces 17. The carrying surfaces 16, the pulley sheave contact surfaces 17, as well as the bottom surface 18 are part of the circumferential surface 19.

On the front surface 11 of the transverse element 10, a projection 21 is arranged. In the shown example, the projection 21 is located on the top portion 15, and corresponds to a hole in the back surface 12. In figure 3, the hole is depicted by means of dotted lines and indicated by the reference sign 22. In the push belt 6, the projection 21 of the transverse element 10 is at least partially located in the hole 22 of a subsequent transverse element 10. The projection 21 and the corresponding hole 22 serve to prevent mutual displacement of adjacent transverse elements 10 in a plane perpendicular to the circumferential direction of the push belt 6.

The top portion 15 comprises two retaining surfaces 23 which are located opposite to the carrying surfaces 16. When the transverse element 10 is arranged in a push belt 6, a position of the carriers 7 in the radial direction is delimited by the carrying surfaces 16 on the one hand, and by the retaining surfaces 23 on the other hand. Furthermore, the top portion 15 comprises two top surfaces 24 which are connected to each other. At an end, each of the top surfaces 24 is connected to a retaining surface 23 of the top portion 15. Both the retaining surfaces 23 and the top surfaces 24 are part of the circumferential surface 19.

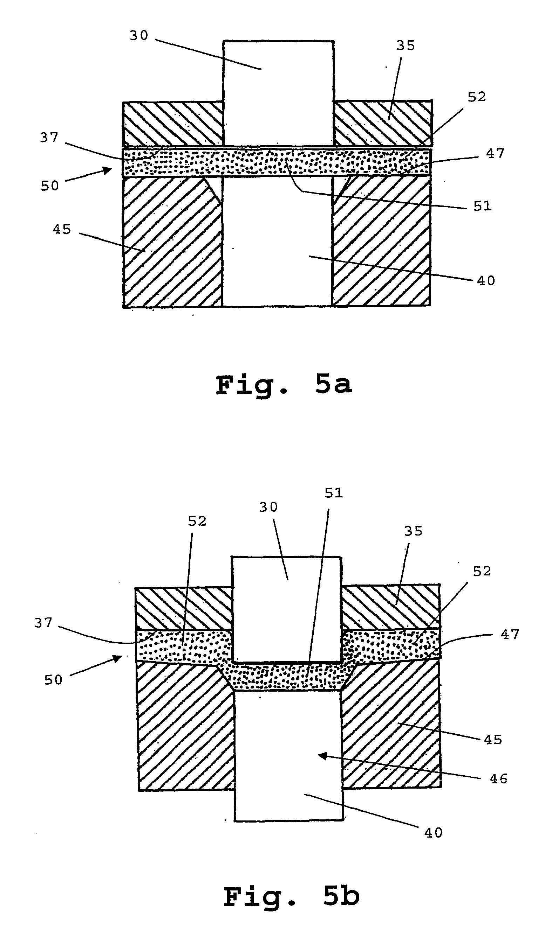

A blanking process known per se of the transverse element 10 will now be explained on the basis of figures 4 and 5a to 5d.

In figure 4, a blanking area of a blanking device 60 and basic material 50 being placed in there are diagrammatically depicted. The blanking device 60 comprises a cutting member 30 which is designed to cut the transverse element 10 out of the basic material 50. The cutting member 30 is inserted in a guiding space 36 in a guiding plate 35, an important function of which is guiding the cutting member 30 during a blanking movement. A supporting member 40 is in line with the cutting member 30, which is designed to support the transverse element 10 during the blanking process. The circumference of both the cutting member 30 and the supporting member 40 corresponds substantially to the circumference of the transverse element 10 to be blanked. The supporting member 40 is inserted in a receiving space 46 in a mould 45, an important function of which is guiding the cutting member 30, the supporting member 40, as well as the transverse element 10 during a blanking movement. The inner circumference of the receiving space 46 corresponds substantially to the circumference of the cutting member 30, the supporting member 40, as well as the transverse element 10. Initially, the basic material 50 is located between the cutting member 30 and the guiding plate 35 on the one hand, and the supporting member 40 and the mould 45 on the other hand. A portion of the basic material 50 which is located between the cutting member 30 and the supporting member 40 is destined to form the transverse element 10, and will hereinafter be referred to as blanking portion 51. Another portion of the basic material 50, namely the portion that is located between the guiding plate 35 and the mould 45, will hereinafter be referred to as rest portion 52.

The mould 45 comprises a mould surface 47, an important function of which is supporting the rest portion 52 of the basic material 50. An inner surface of the receiving space 46 of the mould 45 is connected to the mould surface 47, through a circumferential edge 48. The circumferential edge 48 is bevelled, i.e. a bevel surface 49 is extending between the mould surface 47 and the inner surface of the receiving space 46. Without the bevel surface 49, the mould surface 47 and the inner surface of the receiving space 46 would be connected to each other over a sharp angle of substantially 90°. As has been remarked earlier, when a mould 45 having a sharp circumferential edge 48 would be applied, a transverse element 10 of which the circumferential surface 19 has a low surface quality would be obtained.

In the following, a blanking movement is described on the basis of figures 5a to 5d, in which different successive stages of the blanking movement are diagrammatically depicted.

In a first stage or initial stage, as diagrammatically shown in figure 5a, a blanking portion 51 of the basic material 50 is clamped between the cutting member 30 and the supporting member 40, while a rest portion 52 is clamped between a guiding surface 37 of the guiding plate 35 and the mould surface 47 of the mould 45. In the process, the clamping forces act in a direction substantially perpendicular to the guiding surface 37 and the mould surface 47.

In a second stage, as diagrammatically shown in figure 5b, the entirety of cutting member 30, blanking portion 51 and supporting member 40 is moved with respect to the guiding plate 35, the rest portion 52 and the mould 45, under the influence of pressure. In the process, the direction of movement is substantially perpendicular to the guiding surface 37 and the mould surface 47. As a result of the mutual movement, the cutting member 30 penetrates the basic material 50, and the blanking portion 51 is pressed into the receiving space 46 of the mould 45.

In a third stage, as diagrammatically shown in figure 5c, the blanking portion 51 gets completely detached from the rest portion 52 as a result of the continuing mutual movement. Hereafter, the guiding plate 35 and the cutting member 30 are retracted with respect to the mould 45 and the supporting member 40, wherein the contact between the rest portion 52 and the guiding surface 37 is maintained, and wherein the contact between the rest portion 52 and the mould surface 47 is lost.

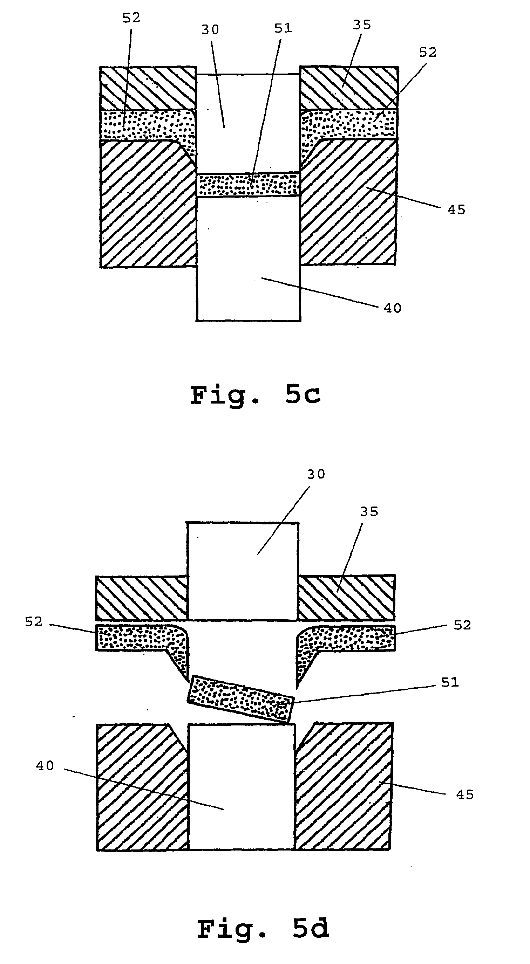

In a fourth stage, as diagrammatically shown in figure 5d, as a result of the mutual movement of the guiding plate 35 and the cutting member 30 on the one hand, and the mould 45 and the supporting member 40 on the other hand, the rest portion 45 has been put to a position at a distance from the mould surface 47. In this position, the rest portion 52 can be removed. Furthermore, the supporting member 40 has been moved with respect to the mould 45 in such a way that the blanking portion 51 has been put to a position above the level of the mould surface 47, so that the blanking portion 51 can be removed as well. In the process, the supporting member 40 may function as pushing member.

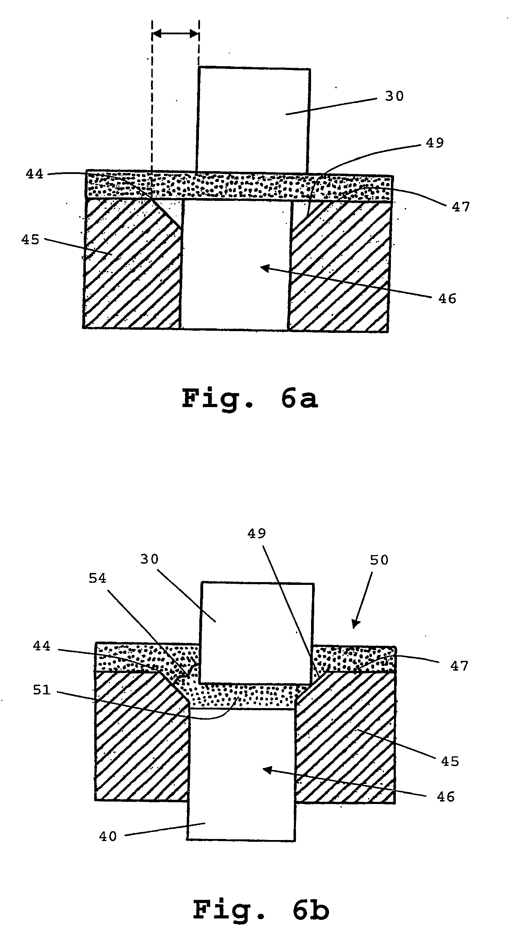

In practice, during the blanking process of the transverse element 10, it may occur that one or more burrs are cut off from the rest portion 52. An important cause of this is a deviation of the position of the cutting member 30 with respect to a position of the receiving space 46 of the mould 45, which can be present before an end of the cutting member 30 enters the receiving space 46 during the blanking movement. When such a deviation is present, the position of the cutting member 30 is corrected by the circumferential edge 48 of the mould 45 during the blanking movement. Prior to the correction, a crack may have been formed in the rest portion 52, which leads to the formation of a burr, in a way as will now be explained with reference to figures 6a to 6c.

Figures 6a to 6c diagrammatically show different stages of a blanking movement. For the sake of clarity, the guiding plate 35 is not shown in the figures.

In figure 6a, the initial stage of the blanking movement is diagrammatically shown, wherein a deviation of the position of the cutting member 30 with respect to the receiving space 46 of the mould 45 is depicted in an exaggerated manner. At one side, a relatively large play is present between the circumference of the cutting member 30 and a transition 44 between the mould surface 47 and the bevel surface 49. In figure 6a, this play is diagrammatically indicated by means of a double arrow, and is hereinafter referred to as cutting play.

In figure 6b, a next stage is diagrammatically shown, wherein the cutting member 30 and the mould 45 have been moved towards each other, so far that the end of the cutting member 30 is in contact with the bevel surface 49 of the mould 45. As a result of the relatively large cutting play, during this movement, a crack 45 is formed in the basic material 50, which extends from the bevel surface 49 to the circumference of the cutting member 30.

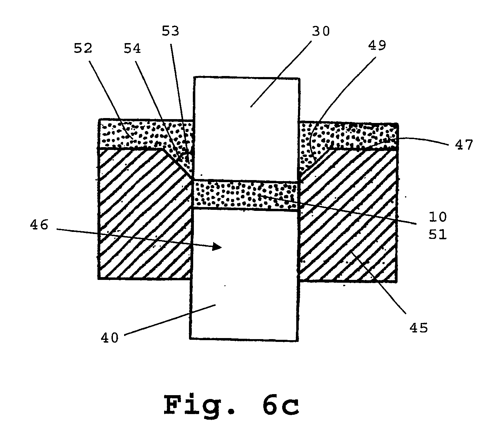

As soon as the cutting member 30 touches the bevel surface 49, a process starts under the influence of the pressure which is exerted on the cutting member 30, in which the position of the cutting member 30 is corrected such that this is capable of moving into the receiving space 46 of the mould 45. During this movement, the blanking portion 51 is cut loose from the rest portion 52. As soon as the blanking portion 51 and the rest portion 52 are completely separated, a loose burr 53 in the form of a relatively small portion of the rest portion 52 that is separated from the other portion of the rest portion 52 by the crack 54 is obtained. Figure 6c diagrammatically shows a stage of the blanking movement in which the burr 53 and the transverse element 10 have just been formed.

When the burr 53 is not removed from the blanking area, and, for example, remains stuck against the mould surface 47 under the influence of the lubrication means which are present there, the burr 53 can end up between the basic material 50 and the supporting member 40, for example, during a next blanking movement, and cause damage to the front surface 11 of the transverse element 10 to be blanked, under the influence of the pressure prevailing during the blanking movement.

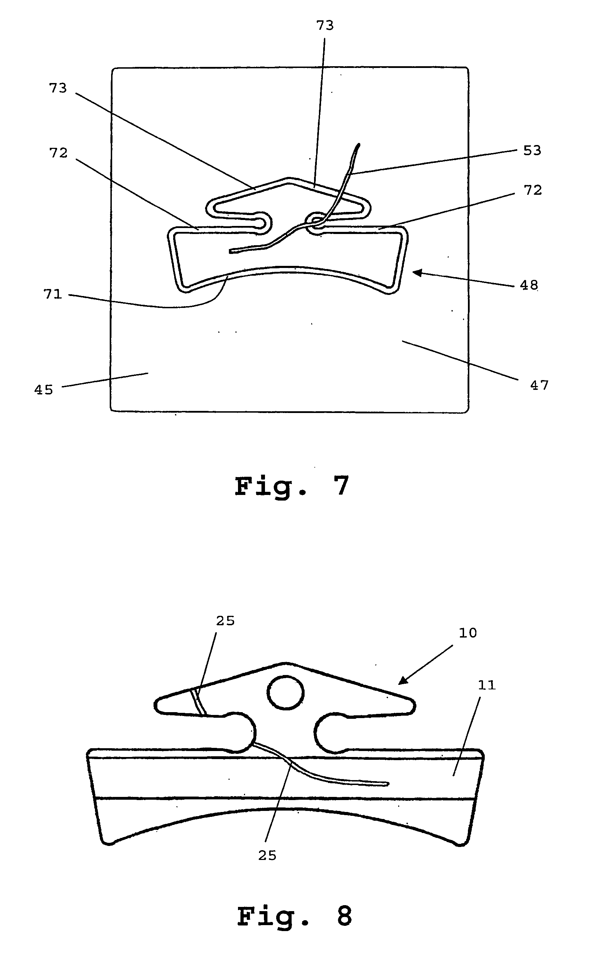

In figure 7, an arbitrary example is shown of the position which can be assumed by the burr 53 on the mould surface 47 with respect to the circumferential edge 48.

In figure 7, it can be seen that the circumferential edge 48 of the mould 45 comprises different portions, among which a bottom surface contacting portion 71 along which the bottom surface 18 of the transverse element 10 to be formed moves during the blanking process, two carrying surface contacting portions 72 along which the carrying surfaces 16 of the transverse element 10 to be formed move during the blanking process, and two top surface contacting portions 73 along which the top surfaces 24 of the transverse element 10 to be blanked are moved during the blanking process.

In figure 8, an example is shown of a transverse element 10 of which the front surface 11 is damaged by a burr 53. The damage is caused because the burr 53 has been pressed in the front surface 11 during the blanking process, and has subsequently gotten loose again from the transverse element 10 during a finishing process. In this way, two slotted cavities 25 are formed on the front surface 11 of the transverse element 10.

Mainly as a result of the way in which the cutting member 30 is loaded during the blanking movement in practice, the deviation of the position of the cutting member 30 with respect to the receiving space 46 of the mould 45 is usually such that a burr 53 is cut loose at the side of the bottom surface 18 of the transverse element 10. Such a burr 53 is relatively long and may cause damage of the carrying surfaces 16, which may be so severe that the obtained transverse element 10 is not suitable for application in a push belt 6.

According to the present invention, by means of a reduction of the bevel of one or more portions of the circumferential edge 48, in other words, a reduction of the dimension of the bevel surface 49 in a direction substantially parallel to the mould surface 47 at the location of one or more portions, the formation of burrs 53 at said one or more portions is prevented. As it is generally true that a reduction of the bevel brings along a deterioration of the surface quality, because a larger portion of the surface in question is being torn loose from surrounding material during the blanking process, in stead of being cut loose, it is important that the bevel is not reduced for all portions of the circumferential edge 48. In particular, the carrying surface contacting portions 72 need to keep a relatively large bevel, because it is important for the functioning of the transverse element 10 in a push belt 6 that the carrying surfaces 16 of the transverse element 10 have a high surface quality. In general, it is true that portions of the circumferential edge 48 which come in contact with surfaces of the transverse element 10 to be formed which need to obtain a high surface quality, need to have a relatively large bevel. Normally, it is not only the carrying surfaces 16 which need to obtain a high surface quality, but also the retaining surfaces 23, for example.

When the transverse element 10 has common dimensions, it is true for the mould 45 which is applied during the blanking process of the transverse element 10 that, in case of a relatively large bevel, the dimension of the bevel surface 49 in a direction substantially parallel to the mould surface 47 is between 0.2 mm and 0.25 mm, for example, whereas, in case of a relatively small bevel, said dimension is between 0.05 mm and 0.1 mm, for example.

Within the scope of the present invention, it is also possible to reduce a dimension of the bevel surface 49 in a direction substantially perpendicular to the mould surface 47, i.e. in a direction substantially parallel to the direction of movement of the cutting member 30 during the blanking process or a direction substantially parallel to the direction of movement of the transverse element 10 to be blanked during the blanking process. However, this is not necessary, because this dimension of the bevel surface 49 is not related to the size of the cutting play. However, when it is chosen to reduce the bevel and to simultaneously maintain an angle between the mould surface 47 and the bevel surface 49, for example, both the dimension of the bevel surface 49 in a direction substantially parallel to the mould surface 47 and the dimension of the bevel surface 49 in a direction perpendicular to the mould surface 47 are reduced. In that case, a mould 45 is obtained, wherein an angle between the mould surface 47 and the bevel surface 49 is substantially equal for all portions of the circumferential edge 48, and wherein the portions of the circumferential edge 48 having a relatively small bevel also have a relatively small dimension in a direction substantially perpendicular to the mould surface 47.

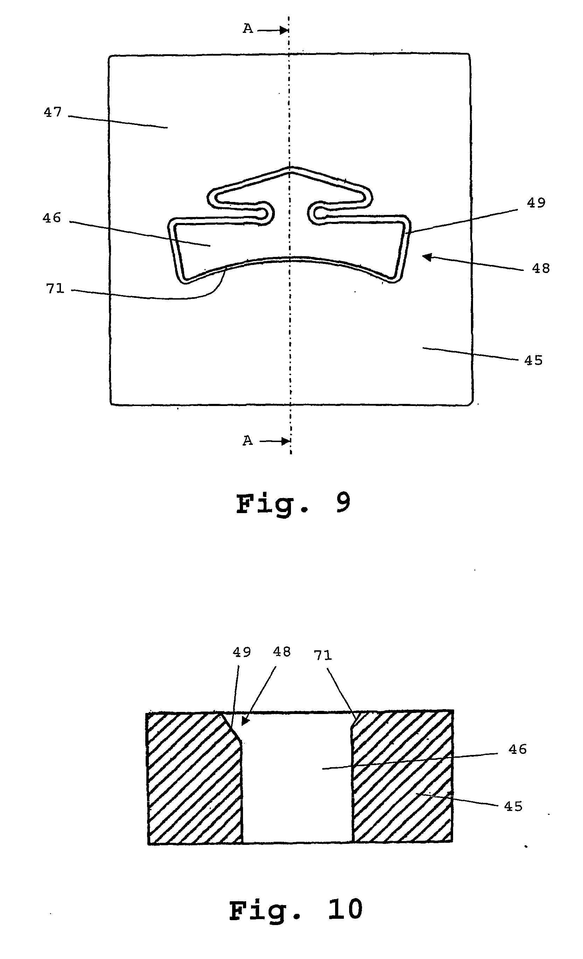

In figures 9 and 10, a mould 45 according to a first preferred embodiment of the present invention is shown. In this mould 45, the bevel of the bottom surface contacting portion 71 is smaller than the bevel of the other portions of the circumferential edge 48, in other words, at the bottom surface contacting portion 71, the dimension of the bevel surface 49 in a direction substantially parallel to the mould surface 47 is smaller than it is at the other portions of the circumferential edge 48.

Because the bottom surface contacting portion 71 has a relatively small bevel, during a blanking process in which the mould 45 is applied, formation of burrs is prevented at the bottom surface contacting portion 71. A bottom surface 18 of a transverse element 10 which is obtained while the mould 45 is applied has a lower surface quality than the other surfaces which are part of the circumferential surface 19 of the transverse element 10.

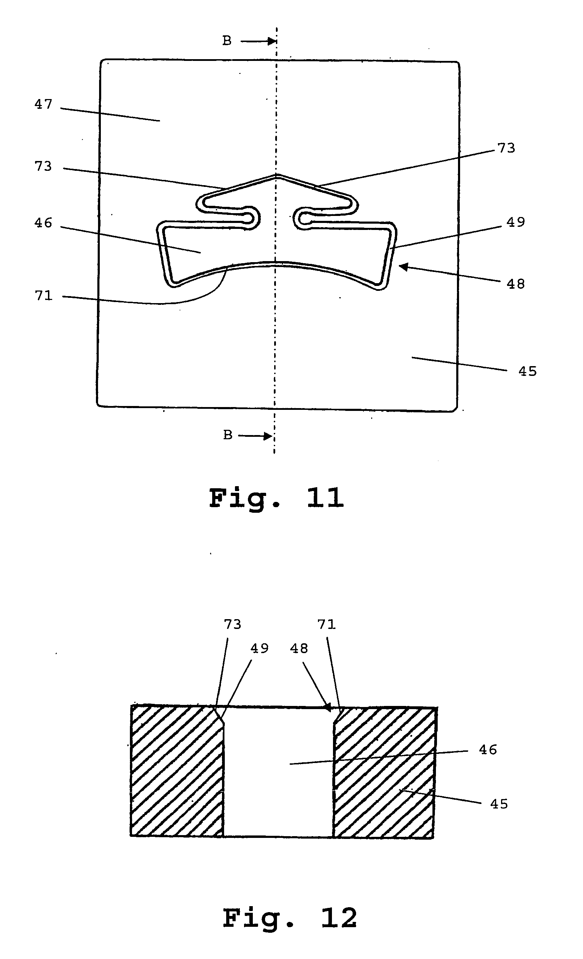

In figures 11 and 12, a mould 45 according to a second preferred embodiment of the present invention is shown. In this mould 45, the bevel of the bottom surface contacting portion 71 and the bevel of the top surface contacting portions 73 are smaller than the bevel of the other portions of the circumferential edge 48, in other words, the dimension of the bevel surface 49 in a direction substantially parallel to the mould surface 47 is smaller at the bottom surface contacting portion 71 and the top surface contacting portions 73 than it is at the other portions of the circumferential edge 48.

Because the bottom surface contacting portion 71 and the top surface contacting surfaces 73 have a relatively small bevel, during a blanking process in which the mould 45 is applied, formation of burrs is prevented at the bottom surface contacting portion 71 and the top surface contacting portions 73. A bottom surface 18 and top surfaces 24 of a transverse element 10 which is obtained while the mould 45 is applied have a lower surface quality than the other surfaces which are part of the circumferential surface 19 of the transverse element 10.

It is not necessary that, in a direction substantially parallel to the mould surface 47, the dimension of the bevel surface 49 at the bottom surface contacting portion 71 is equal to said dimension at the top surface contacting portions 73. It is important that at both the bottom surface contacting portion 71 and the top surface contacting portions 73, said dimension is smaller than it is at the other portions of the circumferential edge 48.

The application of the mould 45 according to the first preferred embodiment of the present invention is preferred with respect to the application of the mould 45 according to the second preferred embodiment of the present invention in situations in which a good surface quality of the top surfaces 24 of the transverse element 10 is required. For example, this is the case when a stamp is applied to the top surfaces 24 for the purpose of marking the transverse element 10.

When the present invention is applied during the blanking process of a transverse element 10, the problem of the formation of burrs 53 at surfaces of the circumferential surface 19 of the transverse element 10 is solved, wherein a lower surface quality of the surfaces in question is obtained. However, the lower surface quality does not create a new problem as long as this is not obtained for surfaces of the circumferential surface 19 for which it is important that the surface quality is high, for example the carrying surfaces 16 which, in a push belt 6, serve to support the carriers 7 of the push belt 6, and the retaining surfaces 23 which, in a push belt 6, serve to delimit a position of the carriers 7 of the push belt 6 in the radial direction of the push belt 6.

It will be clear to a person skilled in the art that the scope of the present invention is not limited to the examples discussed above, but that several amendments and modification thereof are possible without deviating from the scope of the invention as defined in the appended claims.

In the foregoing, a method is described, which is suitable to be applied for forming a transverse element 10 which is designed to be part of a push belt 6 for a continuously transmission 1, which transverse element 10 has two main body surfaces 11, 12 and a circumferential surface 19. The transverse element 10 is blanked out of basic material 50 during a blanking movement, wherein, among other things, a mould 45 having a receiving space 46 is applied. When, during the blanking movement, the transverse element 10 enters the receiving space 46, the circumferential surface 19 of the transverse element 10 moves along a bevelled circumferential edge 48 of the mould 45.

At least one portion of the circumferential edge 48 of the mould 45 has a relatively small bevel, whereas the other portion of the circumferential edge 48 has a relatively large bevel. At the portion of the circumferential edge 48 mentioned first, formation of burrs during the blanking movement is prevented, whereas at the portion of the circumferential edge 48 mentioned last, a relatively high surface quality of the circumferential surface 19 of the transverse element 10 is obtained.

## Claims

1. Method for forming a transverse element (10) which is designed to be part of a push belt (6) for a continuously variable transmission (1), which transverse element (10) comprises two main body surfaces (11, 12) and a circumferential surface (19) extending between the main body surfaces (11, 12),
wherein, during a blanking movement, the transverse element (10) is blanked out of basic material (50) by applying a cutting member (30), a supporting member (40) and a mould (45) having a receiving space (46) for receiving the transverse element (10) to be blanked, the supporting member (40) and an end of the cutting member (30);
wherein, during a blanking movement, the transverse element (10) to be blanked is clamped between the cutting member (30) and the supporting member (40), wherein the cutting member (30), the transverse element (10) to be blanked and the supporting member (40) on the one hand, and the mould (45) on the other hand, are moved with respect to each other; **characterised in that**
the circumferential surface (19) of the transverse element (10) to be blanked is moved along a bevelled circumferential edge (48) of the mould (45) while entering the receiving space (46) of the mould (45), wherein at least one portion of the circumferential surface (19) of the transverse element (10) to be blanked is moved along a portion of the circumferential edge (48) of the mould (45) having a relatively small bevel, and wherein the other portion of the circumferential surface (19) of the transverse element (10) to be blanked is moved along a portion of the circumferential edge (48) of the mould (45) having a relatively large bevel.

2. Method according to claim 1, suitable to be applied for the purpose of forming a transverse element (10) of which the circumferential surface (19) comprises the following surfaces:
- two carrying surfaces (16) for supporting carriers (7) of the push belt (6), located at opposite sides of the transverse element (10);
- two pulley sheave contact surfaces (17) for establishing contact between the transverse element (10) and pulley sheaves of a pulley (4, 5) of a continuously variable transmission (1), located at opposite sides of the transverse element (10); and
- a bottom surface (18);
wherein the pulley sheave contact surfaces (17) are connected to the carrying surfaces (16) on the one hand, and to the bottom surface (18) on the other hand;
wherein, during the blanking movement, while entering the receiving space (46) of the mould (45), the bottom surface (18) of the transverse element (10) to be blanked is moved along a portion (71) of the circumferential edge (48) having a relatively small bevel, and the carrying surfaces (16) of the transverse element (10) are moved along portions (72) of the circumferential edge (48) having a relatively large bevel.

3. Method according to claim 1 or 2, suitable to be applied for the purpose of forming a transverse element (10) of which the circumferential surface (19) comprises the following surfaces:
- two retaining surfaces (23) for delimiting a position of carriers (7) of the push belt (6) in the radial direction of the push belt (6), located at opposite sides of the transverse element (10); and
- two top surfaces (24) which are connected to each other, wherein, at an end, each of the top surfaces (24) is connected to a retaining surface (23);
wherein, during the blanking process, while entering the receiving space (46) of the mould (45), the top surfaces (24) of the transverse element (10) to be blanked are moved along a portion (73) of the circumferential edge (48) having a relatively small bevel, and the retaining surfaces (23) of the transverse element (10) to be blanked are moved along portions of the circumferential edge (48) having a relatively large bevel.

4. Method according to any of claims 1-3, wherein the portion of the circumferential edge (48) of the mould (45) having the relatively small bevel, along which at least one portion of the circumferential surface (19) of the transverse element (10) to be blanked is moved, has a relatively small dimension in a direction substantially parallel to a direction of movement of the transverse element (10) to be blanked, and wherein the portion of the circumferential edge (48) of the mould (45) having the relatively large bevel, along which the other portion of the circumferential surface (19) of the transverse element (10) to be blanked is moved, has a relatively large dimension in a direction substantially parallel to the direction of movement of the transverse element (10) to be blanked.

5. Mould (45), suitable to be applied for the purpose of a blanking process in which a transverse element (10) for a push belt (6) for a continuously variable transmission (1) is blanked out of basic material (50) during a blanking movement, while further applying a cutting member (30) and a supporting member (40),
wherein, during a blanking movement, the transverse element (10) to be blanked is clamped between the cutting member (30) and the supporting member (40), wherein the cutting member (30), the transverse element (10) to be blanked and the supporting member (40) on the one hand, and the mould (45) on the other hand, are moved with respect to each other;
which mould (45) has a receiving space (46) for receiving the transverse element (10) to be blanked, the supporting member (40) and an end of the cutting member (30), as well as a mould surface (47) for supporting material (52) surrounding the transverse element (10) to be blanked, wherein the mould surface (47) and an inner surface of the receiving space (46) are connected to each other via a bevel surface (49); **characterised in that**
a dimension of at least one portion of the bevel surface (49) in a direction substantially parallel to the mould surface (47) is relatively small, and wherein a dimension of the other portion of the bevel surface (49) in a direction substantially parallel to the mould surface (47) is relatively large.

6. Mould (45) according to claim 5, suitable to be applied for the purpose of a blanking process for forming a transverse element (10) having two main body surfaces (11, 12) and a circumferential surface (19) extending between the main body surfaces (11, 12), wherein the circumferential surface (19) comprises the following surfaces:
- two carrying surfaces (16) for supporting carriers (7) of the push belt (6), located at opposite sides of the transverse element (10);
- two pulley sheave contact surfaces (17) for establishing contact between the transverse element (10) and pulley sheaves of a pulley (4, 5) of a continuously variable transmission (1), located at opposite sides of the transverse element (10); and
- a bottom surface (18);
wherein the pulley sheave contact surfaces (17) are connected to the carrying surfaces (16) on the one hand, and to the bottom surface (18) on the other hand;
wherein, in a direction substantially parallel to the mould surface (47), at the location of a portion (71) of the circumferential edge (48) which is destined to come in contact with the bottom surface (18) of the transverse element (10) to be blanked, a dimension of the bevel surface (49) is relatively small, and, in a direction substantially parallel to the mould surface (47), at the location of portions (72) of the circumferential edge (48) which are destined to come in contact with the carrying surfaces (16) of the transverse element (10) to be blanked, a dimension of the bevel surface (49) is relatively large.

7. Mould (45) according to claim 5 or 6, suitable to be applied for the purpose of a blanking process for forming a transverse element (10) having two main body surfaces (11, 12) and a circumferential surface (19) extending between the main body surfaces (11, 12), wherein the circumferential surface (19) comprises the following surfaces:
- two retaining surfaces (23) for delimiting a position of carriers (7) of the push belt (6) in the radial direction of the push belt (6), located at opposite sides of the transverse element (10); and
- two top surfaces (24) which are connected to each other, wherein, at an end, each of the top surfaces (24) is connected to a retaining surface (23);
wherein, in a direction substantially parallel to the mould surface (47), at the location of a portion (73) of the circumferential edge (48) which is destined to come in contact with the top surfaces (24) of the transverse element (10) to be blanked during a blanking movement, a dimension of the bevel surface (49) is relatively small, and, in a direction substantially parallel to the mould surface (47), at the location of portions of the circumferential edge (48) which are destined to come in contact with the retaining surfaces (23) of the transverse element (10) to be blanked, a dimension of the bevel surface (49) is relatively large.

8. Mould (45) according to any of claims 5-7, wherein the relatively small dimension of the bevel surface (49) in a direction substantially parallel to the mould surface (47) is in a range of 0.05 mm to 0.1 mm, and wherein the relatively large dimension of the bevel surface (49) in a direction substantially parallel to the mould surface (47) is in a range of 0.2 mm to 0.25 mm.

9. Mould (45) according to any of claims 5-8, wherein the portion of the bevel surface (49) which has a relatively small dimension in a direction substantially parallel to the mould surface (47) also has a relatively small dimension in a direction substantially perpendicular to the mould surface (47), and wherein the portion of the bevel surface (49) which has a relatively large dimension in a direction substantially parallel to the mould surface (47) also has a relatively large dimension in a direction substantially perpendicular to the mould surface (47).

10. Mould (45) according to any of claims 5-9, wherein an angle between the mould surface (47) and the bevel surface (49) for an arbitrary portion of the bevel surface (49) is substantially equal to said angle for an arbitrary other portion of the bevel surface (49).

11. Transverse element (10), designed to be part of a push belt (6) for a continuously variable transmission (1), comprising two main body surfaces (11, 12) and a circumferential surface (19) extending between the main body surfaces (11, 12), **characterised in that** a surface quality of at least one portion of the circumferential surface (19) is lower than a surface quality of the other portion of the circumferential surface (19).

12. Transverse element (10) according to claim 11, comprising:
- two carrying surfaces (16) for supporting carriers (7) of the push belt (6), located at opposite sides of the transverse element (10);
- two pulley sheave contact surfaces (17) for establishing contact between the transverse element (10) and pulley sheaves of a pulley (4, 5) of a continuously variable transmission (1), located at opposite sides of the transverse element (10); and
- a bottom surface (18);
wherein the pulley sheave contact surfaces (17) are connected to the carrying surfaces (16) on the one hand, and to the bottom surface (18) on the other hand;
wherein a surface quality of the bottom surface (18) is lower than a surface quality of the carrying surfaces (16).

13. Transverse element (10) according to claim 11 or 12, comprising:
- two retaining surfaces (23) for delimiting a position of carriers (7) of the push belt (6) in the radial direction of the push belt (6), located at opposite sides of the transverse element (10); and
- two top surfaces (24) which are connected to each other, wherein, at an end, each of the top surfaces (24) is connected to a retaining surface (23);
wherein a surface quality of the top surfaces (24) is lower than a surface quality of the retaining surfaces (23).

## Patentansprüche

1. Verfahren zum Bilden eines Querelements (10), das entworfen ist, um ein Teil eines Schubriemens (6) für ein stufenlos verstellbares Getriebe (1) zu sein, wobei das Querelement (10) zwei Hauptkörperoberflächen (11, 12) und eine Umfangsoberfläche (19), die sich zwischen den Hauptkörperoberflächen (11, 12) erstreckt, aufweist,
wobei das Querelement (10) durch Anwenden eines Stanzglieds (30), eines Stützglieds (40) und einer Form (45) mit einem Aufnahmeraum (46) zum Aufnehmen des zu stanzenden Querelements (10), des Stützglieds (40) und eines Endes des Stanzglieds (30) während einer Stanzbewegung aus einem Grundmaterial (50) gestanzt wird;
wobei das zu stanzende Querelement (10) während einer Stanzbewegung zwischen dem Stanzglied (30) und dem Stützglied (40) eingeklemmt ist, wobei das Stanzglied (30), das zu stanzende Querelement (10) und das Stützglied (40) einerseits und die Form (45) andererseits gegeneinander bewegt werden;
**dadurch gekennzeichnet,**
**dass** die Umfangsoberfläche (19) des zu stanzenden Querelements (10), während dieses in den Aufnahmeraum (46) der Form (45) eintritt, entlang einer abgeschrägten Umfangskante (48) der Form (45) bewegt wird, wobei mindestens ein Teil der Umfangsoberfläche (19) des zu stanzenden Querelements (10) entlang eines Teils der Umfangskante (48) der Form (45) mit einer relativ kleinen Abschrägung bewegt wird, und wobei der andere Teil der Umfangsoberfläche (19) des zu stanzenden Querelements (10) entlang eines Teils der Umfangskante (48) der Form (45) mit einer relativ großen Abschrägung bewegt wird.

2. Verfahren nach Anspruch 1, das geeignet ist, um für den Zweck eines Bildens eines Querelements (10) angewandt zu werden, dessen Umfangsoberfläche (19) folgende Oberflächen aufweist:
- zwei Trageoberflächen (16) zum Stützen von Trägern (7) des Schubriemens (6), die sich auf voneinander abgewandten Seiten des Querelements (10) befinden;
- zwei Rollenscheiben-Kontaktoberflächen (17) zum Einrichten eines Kontakts zwischen dem Querelement (10) und Rollenscheiben einer Rolle (4, 5) eines stufenlos verstellbaren Getriebes (1), die sich auf voneinander abgewandten Seiten des Querelements (10) befinden; und
- eine untere Oberfläche (18);
wobei die Rollenscheiben-Kontaktoberflächen (17) einerseits mit den Trageoberflächen (16) und andererseits mit der unteren Oberfläche (18) verbunden sind;
wobei während des Eintretens in den Aufnahmeraum (46) der Form (45) während der Stanzbewegung die untere Oberfläche (18) des zu stanzenden Querelements (10) entlang eines Teils (71) der Umfangskante (48) mit einer relativ kleinen Abschrägung bewegt wird und die Trageoberflächen (16) des Querelements (10) entlang Teilen (72) der Umfangskante (48) mit einer relativ großen Abschrägung bewegt werden.

3. Verfahren nach Anspruch 1 oder 2, das geeignet ist, um für den Zweck eines Bildens eines Querelements (10) angewandt zu werden, dessen Umfangsoberfläche (19) folgende Oberflächen aufweist:
- zwei Halteoberflächen (23) zum Begrenzen einer Position von Trägern (7) des Schubriemens (6) in der radialen Richtung des Schubriemens (6), die sich auf voneinander abgewandten Seiten des Querelements (10) befinden; und
- zwei obere Oberflächen (24), die miteinander verbunden sind, wobei an einem Ende jede der oberen Oberflächen (24) mit einer Halteoberfläche (23) verbunden ist;
wobei während des Eintretens der Form (45) in den Aufnahmeraum (46) während des Stanzverfahrens die oberen Oberflächen (24) des zu stanzenden Querelements (10) entlang eines Teils (73) der Umfangskante (48) mit einer relativ kleinen Abschrägung bewegt werden und die Halteoberflächen (23) des zu stanzenden Querelements (10) entlang Teilen der Umfangskante (48) mit einer relativ großen Abschrägung bewegt werden.

4. Verfahren nach einem der Ansprüche 1-3, bei dem der Teil der Umfangskante (48) der Form (45) mit der relativ kleinen Abschrägung, entlang dessen mindestens ein Teil der Umfangsoberfläche (19) des zu stanzenden Querelements (10) bewegt wird, eine relativ kleine Abmessung in einer Richtung, die im Wesentlichen parallel zu einer Bewegungsrichtung des zu stanzenden Querelements (10) ist, hat, und bei dem der Teil der Umfangskante (48) der Form (45) mit der relativ großen Abschrägung, entlang dessen der andere Teil der Umfangsoberfläche (19) des zu stanzenden Querelements (10) bewegt wird, eine relativ große Abmessung in einer Richtung, die im Wesentlichen parallel zu der Bewegungsrichtung des zu stanzenden Querelements (10) ist, hat.

5. Form (45), die geeignet ist, um für den Zweck eines Stanzverfahrens angewandt zu werden, bei dem ein Querelement (10) für einen Schubriemen (6) für ein stufenlos verstellbares Getriebe (1) während einer Stanzbewegung aus einem Grundmaterial (50) gestanzt wird, während ferner ein Stanzglied (30) und ein Stützglied (40) angewandt werden, wobei das zu stanzende Querelement (10) während einer Stanzbewegung zwischen dem Stanzglied (30) und dem Stützglied (40) eingeklemmt ist, wobei das Stanzglied (30), das zu stanzende Querelement (10) und das Stützglied (40) einerseits und die Form (45) andererseits gegeneinander bewegt werden;
wobei die Form (45) einen Aufnahmeraum (46) zum Aufnehmen des zu stanzenden Querelements (10), des Stützglieds (40) und eines Endes des Stanzglieds (30) sowie eine Formoberfläche (47) zum Stützen eines Materials (52), das das zu stanzende Querelement (10) umgibt, hat, wobei die Formoberfläche (47) und eine innere Oberfläche des Aufnahmeraums (46) über eine abgeschrägte Oberfläche (49) miteinander verbunden sind; **dadurch gekennzeichnet,**
**dass** eine Abmessung von mindestens einem Teil der abgeschrägten Oberfläche (49) in einer Richtung, die im Wesentlichen parallel zu der Formoberfläche (47) ist, relativ klein ist, und eine Abmessung des anderen Teils der abgeschrägten Oberfläche (49) in einer Richtung, die im Wesentlichen parallel zu der Formoberfläche (47) ist, relativ groß ist.

6. Form (45) nach Anspruch 5, die geeignet ist, um für den Zweck eines Stanzverfahrens zum Bilden eines Querelements (10) mit zwei Hauptkörperoberflächen (11, 12) und einer Umfangsoberfläche (19), die sich zwischen den Hauptkörperoberflächen (11, 12) erstreckt, angewandt zu werden, wobei die Umfangsoberfläche (19) folgende Oberflächen aufweist:
- zwei Trageoberflächen (16) zum Stützen von Trägern (7) des Schubriemens (6), die sich auf voneinander abgewandten Seiten des Querelements (10) befinden;
- zwei Rollenscheiben-Kontaktoberflächen (17) zum Einrichten eines Kontakts zwischen dem Querelement (10) und Rollenscheiben einer Rolle (4, 5) eines stufenlos verstellbaren Getriebes (1), die sich auf voneinander abgewandten Seiten des Querelements (10) befinden; und
- eine untere Oberfläche (18);
wobei die Rollenscheiben-Kontaktoberflächen (17) einerseits mit den Trageoberflächen (16) und andererseits mit der unteren Oberfläche (18) verbunden sind;
wobei in einer Richtung, die im Wesentlichen parallel zu der Formoberfläche (47) ist, an dem Ort eines Teils (71) der Umfangskante (48), der dazu bestimmt ist, in Kontakt mit der unteren Oberfläche (18) des zu stanzenden Querelements (10) zu kommen, eine Abmessung der abgeschrägten Oberfläche (49) relativ klein ist, und in einer Richtung, die im Wesentlichen parallel zu der Formoberfläche (47) ist, an dem Ort von Teilen (72) der Umfangskante (48), die dazu bestimmt sind, in Kontakt mit den Trageoberflächen (16) des zu stanzenden Querelements (10) zu kommen, eine Abmessung der abgeschrägten Oberfläche (49) relativ groß ist.

7. Form (45) nach Anspruch 5 oder 6, die geeignet ist, um für den Zweck eines Stanzverfahrens zum Bilden eines Querelements (10) mit zwei Hauptkörperoberflächen (11, 12) und einer Umfangsoberfläche (19), die sich zwischen den Hauptkörperoberflächen (11, 12) erstreckt, angewandt zu werden, wobei die Umfangsoberfläche (19) folgende Oberflächen aufweist:
- zwei Halteoberflächen (23) zum Begrenzen einer Position von Trägern (7) des Schubriemens (6) in der radialen Richtung des Schubriemens (6), die sich auf voneinander abgewandten Seiten des Querelements (10) befinden; und
- zwei obere Oberflächen (24), die miteinander verbunden sind, wobei an einem Ende jede der oberen Oberflächen (24) mit einer Halteoberfläche (23) verbunden ist;
wobei in einer Richtung, die im Wesentlichen parallel zu der Formoberfläche (47) ist, an dem Ort eines Teils (73) der Umfangskante (48), der dazu bestimmt ist, während einer Stanzbewegung in Kontakt mit den oberen Oberflächen (24) des zu stanzenden Querelements (10) zu kommen, eine Abmessung der abgeschrägten Oberfläche (49) relativ klein ist, und in einer Richtung, die im Wesentlichen parallel zu der Formoberfläche (47) ist, an dem Ort von Teilen der Umfangskante (48), die dazu bestimmt sind, in Kontakt mit den Halteoberflächen (23) des zu stanzenden Querelements (10) zu kommen, eine Abmessung der abgeschrägten Oberfläche (49) relativ groß ist.

8. Form (45) nach einem der Ansprüche 5-7, bei der die relativ kleine Abmessung der abgeschrägten Oberfläche (49) in einer Richtung, die im Wesentlichen parallel zu der Formoberfläche (47) ist, in einem Bereich von 0,05 mm bis 0,1 mm liegt, und bei der die relativ große Abmessung der abgeschrägten Oberfläche (49) in einer Richtung, die im Wesentlichen parallel zu der Formoberfläche (47) ist, in einem Bereich von 0,2 mm bis 0,25 mm liegt.

9. Form (45) nach einem der Ansprüche 5-8, bei der der Teil der abgeschrägten Oberfläche (49), der in einer Richtung, die im Wesentlichen parallel zu der Formoberfläche (47) ist, eine relativ kleine Abmessung hat, auch in einer Richtung, die im Wesentlichen senkrecht zu der Formoberfläche (47) ist, eine relativ kleine Abmessung hat, und bei der der Teil der abgeschrägten Oberfläche (49), der in einer Richtung, die im Wesentlichen parallel zu der Formoberfläche (47) ist, eine relativ große Abmessung hat, auch in einer Richtung, die im Wesentlichen senkrecht zu der Formoberfläche (47) ist, eine relativ große Abmessung hat.

10. Form (45) nach einem der Ansprüche 5-9, bei der ein Winkel zwischen der Formoberfläche (47) und der abgeschrägten Oberfläche (49) für einen beliebigen Teil der abgeschrägten Oberfläche (49) im Wesentlichen gleich dem Winkel für einen beliebigen anderen Teil der abgeschrägten Oberfläche (49) ist.

11. Querelement (10), das entworfen ist, um ein Teil eines Schubriemens (6) für ein stufenlos verstellbares Getriebe (1) zu sein, und das zwei Hauptkörperoberflächen (11, 12) und eine Umfangsoberfläche (19), die sich zwischen den Hauptkörperoberflächen (11, 12) erstreckt, aufweist, **dadurch gekennzeichnet, dass** eine Oberflächenqualität von mindestens einem Teil der Umfangsoberfläche (19) niedriger als eine Oberflächenqualität des anderen Teils der Umfangsoberfläche (19) ist.

12. Querelement (10) nach Anspruch 11, mit:
- zwei Trageoberflächen (16) zum Stützen von Trägern (7) des Schubriemens (6), die sich auf voneinander abgewandten Seiten des Querelements (10) befinden;
- zwei Rollenscheiben-Kontaktoberflächen (17) zum Einrichten eines Kontakts zwischen dem Querelement (10) und Rollenscheiben einer Rolle (4, 5) eines stufenlos verstellbaren Getriebes (1), die sich auf entgegengesetzten Seiten des Querelements (10) befinden; und
- einer unteren Oberfläche (18);
wobei die Rollenscheiben-Kontaktoberflächen (17) einerseits mit den Trageoberflächen (16) und andererseits mit der unteren Oberfläche (18) verbunden sind;
wobei eine Oberflächenqualität der unteren Oberfläche (18) niedriger als eine Oberflächenqualität der Trageoberfläehen (16) ist.

13. Querelement (10) nach Anspruch 11 oder 12, mit:
- zwei Halteoberflächen (23) zum Begrenzen einer Position von Trägern (7) des Schubriemens (6) in der radialen Richtung des Schubriemens (6), die sich auf voneinander abgewandten Seiten des Querelements (10) befinden; und
- zwei oberen Oberflächen (24), die miteinander verbunden sind, wobei an einem Ende jede der oberen Oberflächen (24) mit einer Halteoberfläche (23) verbunden ist;
wobei eine Oberflächenqualität der oberen Oberflächen (24) niedriger als eine Oberflächenqualität der Halteoberflächen (23) ist.

## Revendications

1. Procédé de formation d'un élément transversal (10) qui est conçu pour faire partie d'une courroie de poussée (6) pour une transmission à variation continue (1), ledit élément transversal (10) comprenant deux surfaces de corps principales (11, 12) et une surface périphérique (19) s'étendant entre les surfaces de corps principales (11,12),
dans lequel, pendant un mouvement de découpage, l'élément transversal (10) est découpé dans du matériau de base (50) en appliquant un élément coupant (30), un élément de support (40) et un moule (45) ayant un espace récepteur (46) pour recevoir l'élément transversal (10) à découper, l'élément de support (40) et une extrémité de l'élément coupant (30) ;
dans lequel, pendant un mouvement de découpage, l'élément transversal (10) à découper est serré entre l'élément coupant (30) et l'élément de support (40), où l'élément coupant (30), l'élément transversal (10) à découper et l'élément de support (40) d'une part, et le moule (45) d'autre part, sont déplacés les uns par rapport à l'autre ;
**caractérisé en ce que**
la surface périphérique (19) de l'élément transversal (10) à découper est déplacée le long d'un bord périphérique biseauté (48) du moule (45) en entrant dans l'espace récepteur (46) du moule (45), où au moins une partie de la surface périphérique (19) de l'élément transversal (10) à découper est déplacée le long d'une partie du bord périphérique (48) du moule (45) ayant un biseau relativement petit, et où l'autre partie de la surface périphérique (19) de l'élément transversal (10) à découper est déplacée le long d'une partie du bord périphérique (48) du moule (45) ayant un biseau relativement grand.

2. Procédé selon la revendication 1, approprié pour être appliqué dans le but de former un élément transversal (10) dont la surface périphérique (19) comprend les surfaces suivantes :
- deux surfaces portantes (16) pour supporter des supports (7) de la courroie de poussée (6), situées sur des côtés opposés de l'élément transversal (10) ;
- deux surfaces de contact de roue de poulie (17) pour établir un contact entre l'élément transversal (10) et les roues de poulie d'une poulie (4, 5) d'une transmission à variation continue (1), situées sur des côtés opposés de l'élément transversal (10) ; et
- une surface inférieure (18) ;
dans lequel les surfaces de contact de roue de poulie (17) sont reliées aux surfaces portantes (16) d'une part, et à la surface inférieure (18) d'autre part ;
dans lequel, pendant le mouvement de découpage, en entrant dans l'espace récepteur (46) du moule (45), la surface inférieure (18) de l'élément transversal (10) à découper est déplacée le long d'une partie (71) du bord périphérique (48) ayant un biseau relativement petit, et les surfaces portantes (16) de l'élément transversal (10) sont déplacées le long de parties (72) du bord périphérique (48) ayant un biseau relativement grand.

3. Procédé selon la revendication 1 ou 2, approprié pour être appliqué dans le but de former un élément transversal (10) dont la surface périphérique (19) comprend les surfaces suivantes :
- deux surfaces de retenue (23) pour délimiter une position des supports (7) de la courroie de poussée (6) dans la direction radiale de la courroie de poussée (6), situées sur des côtés opposés de l'élément transversal (10) ; et
- deux surfaces supérieures (24) qui sont reliées l'une à l'autre, où, à une extrémité, chacune des surfaces supérieures (24) est reliée à une surface de retenue (23) ;
dans lequel, pendant le processus de découpage, en entrant dans l'espace récepteur (46) du moule (45), les surfaces supérieures (24) de l'élément transversal (10) à découper sont déplacées le long d'une partie (73) du bord périphérique (48) ayant un biseau relativement petit, et les surfaces de retenue (23) de l'élément transversal (10) à découper sont déplacées le long de parties du bord périphérique (48) ayant un biseau relativement grand.

4. Procédé selon l'une quelconque des revendications 1 à 3, dans lequel la partie du bord périphérique (48) du moule (45) ayant le biseau relativement petit, le long de laquelle au moins une partie de la surface périphérique (19) de l'élément transversal (10) à découper est déplacée, a une dimension relativement petite dans une direction substantiellement parallèle à une direction de déplacement de l'élément transversal (10) à découper, et dans lequel la partie du bord périphérique (48) du moule (45) ayant le biseau relativement grand, le long de laquelle l'autre partie de la surface périphérique (19) de l'élément transversal (10) à découper est déplacée, a une dimension relativement grande dans une direction substantiellement parallèle à la direction de déplacement de l'élément transversal (10) à découper.

5. Moule (45), apte à être appliqué dans le but d'un processus de découpage dans lequel un élément transversal (10) pour une courroie de poussée (6) pour une transmission à variation continue (1) est découpé dans du matériau de base (50) au cours d'un mouvement de découpage, tout en appliquant en outre un élément coupant (30) et un élément de support (40), dans lequel, pendant un mouvement de découpage, l'élément transversal (10) à découper est serré entre l'élément coupant (30) et l'élément de support (40), où l'élément coupant (30), l'élément transversal (10) à découper et l'élément de support (40) d'une part, et le moule (45) d'autre part, sont déplacés les uns par rapport à l'autre ;
ledit moule (45) ayant un espace récepteur (46) pour recevoir l'élément transversal (10) à découper, l'élément de support (40) et une extrémité de l'élément coupant (30), ainsi qu'une surface de moule (47) pour supporter la matière (52) qui entoure l'élément transversal (10) à découper, la surface de moule (47) et une surface intérieure de l'espace récepteur (46) étant reliées l'une à l'autre via une surface de biseau (49) ; **caractérisé en ce que**
une dimension d'au moins une partie de la surface de biseau (49) dans une direction substantiellement parallèle à la surface de moule (47) est relativement petite, et dans lequel une dimension de l'autre partie de la surface de biseau (49) dans une direction substantiellement parallèle à la surface de moule (47) est relativement grande.

6. Moule (45) selon la revendication 5, apte à être appliqué dans le but d'un processus de découpage pour former un élément transversal (10) ayant deux surfaces de corps principales (11, 12) et une surface périphérique (19) s'étendant entre les surfaces de corps principales (11, 12), la surface périphérique (19) comprenant les surfaces suivantes :
- deux surfaces portantes (16) pour supporter des supports (7) de la courroie de poussée (6), situées sur des côtés opposés de l'élément transversal (10) ;
- deux surfaces de contact de roue de poulie (17) pour établir un contact entre l'élément transversal (10) et les roues de poulie d'une poulie (4, 5) d'une transmission à variation continue (1), situées sur des côtés opposés de l'élément transversal (10) ; et
- une surface inférieure (18) ;
dans lequel les surfaces de contact de roue de poulie (17) sont reliées aux surfaces portantes (16) d'une part, et à la surface inférieure (18) d'autre part ;
dans lequel, dans une direction substantiellement parallèle à la surface de moule (47), à l'emplacement d'une partie (71) du bord périphérique (48) qui est destinée à venir en contact avec la surface inférieure (18) de l'élément transversal (10) à découper, une dimension de la surface de biseau (49) est relativement petite, et, dans une direction substantiellement parallèle à la surface de moule (47), à l'emplacement de parties (72) du bord périphérique (48) qui sont destinées à venir en contact avec les surfaces portantes (16) de l'élément transversal (10) à découper, une dimension de la surface de biseau (49) est relativement grande.

7. Moule (45) selon la revendication 5 ou 6, apte à être appliqué dans le but d'un processus de découpage pour former un élément transversal (10) ayant deux surfaces de corps principales (11, 12) et une surface périphérique (19) s'étendant entre les surfaces de corps principales (11, 12), la surface périphérique (19) comprenant les surfaces suivantes :
- deux surfaces de retenue (23) pour délimiter une position des supports (7) de la courroie de poussée (6) dans la direction radiale de la courroie de poussée (6), situées sur des côtés opposés de l'élément transversal (10) ; et
- deux surfaces supérieures (24) qui sont reliées l'une à l'autre, où, à une extrémité, chacune des surfaces supérieures (24) est reliée à une surface de retenue (23) ;
dans lequel, dans une direction substantiellement parallèle à la surface de moule (47), à l'emplacement d'une partie (73) du bord périphérique (48) qui est destinée à venir en contact avec les surfaces supérieures (24) de l'élément transversal (10) à découper au cours d'un mouvement de découpage, une dimension de la surface de biseau (49) est relativement petite, et, dans une direction substantiellement parallèle à la surface de moule (47), à l'emplacement de parties du bord périphérique (48) qui sont destinées à venir en contact avec les surfaces de retenue (23) de l'élément transversal (10) à découper, une dimension de la surface de biseau (49) est relativement grande.

8. Moule (45) selon l'une quelconque des revendications 5 à 7, dans lequel la dimension relativement petite de la surface de biseau (49) dans une direction substantiellement parallèle à la surface de moule (47) est comprise dans un intervalle de 0,05 mm à 0,1 mm, et dans lequel la dimension relativement grande de la surface de biseau (49) dans une direction substantiellement parallèle à la surface de moule (47) est comprise dans un intervalle de 0,2 mm à 0,25 mm.

9. Moule (45) selon l'une quelconque des revendications 5 à 8, dans lequel la partie de la surface de biseau (49) qui a une dimension relativement petite dans une direction substantiellement parallèle à la surface de moule (47) a aussi une dimension relativement petite dans une direction substantiellement perpendiculaire à la surface de moule (47), et dans lequel la partie de la surface de biseau (49) qui a une dimension relativement grande dans une direction substantiellement parallèle à la surface de moule (47) a aussi une dimension relativement grande dans une direction substantiellement perpendiculaire à la surface de moule (47).

10. Moule (45) selon l'une quelconque des revendications 5 à 9, dans lequel un angle entre la surface de moule (47) et la surface de biseau (49) pour une partie arbitraire de la surface de biseau (49) est substantiellement égal audit angle pour une autre partie arbitraire de la surface de biseau (49).

11. Elément transversal (10) conçu pour faire partie d'une courroie de poussée (6) pour une transmission à variation continue (1), comprenant deux surfaces de corps principales (11, 12) et une surface périphérique (19) s'étendant entre les surfaces de corps principales (11, 12), **caractérisé en ce qu'**une qualité de surface d'au moins une partie de la surface périphérique (19) est inférieure à une qualité de surface de l'autre partie de la surface périphérique (19).

12. Elément transversal (10) selon la revendication 11, comprenant :
- deux surfaces portantes (16) pour supporter des supports (7) de la courroie de poussée (6), situées sur des côtés opposés de l'élément transversal (10) ;
- deux surfaces de contact de roue de poulie (17) pour établir un contact entre l'élément transversal (10) et les roues de poulie d'une poulie (4, 5) d'une transmission à variation continue (1), situées sur des côtés opposés de l'élément transversal (10) ; et
- une surface inférieure (18) ;
dans lequel les surfaces de contact de roue de poulie (17) sont reliées aux surfaces portantes (16) d'une part, et à la surface inférieure (18) d'autre part ;
dans lequel une qualité de surface de la surface inférieure (18) est inférieure à une qualité de surface des surfaces portantes (16).

13. Elément transversal (10) selon la revendication 11 ou 12, comprenant:
- deux surfaces de retenue (23) pour délimiter une position des supports (7) de la courroie de poussée (6) dans la direction radiale de la courroie de poussée (6), situées sur des côtés opposés de l'élément transversal (10) ; et
- deux surfaces supérieures (24) qui sont reliées l'une à l'autre, où, à une extrémité, chacune des surfaces supérieures (24) est reliée à une surface de retenue (23) ;
dans lequel une qualité de surface des surfaces supérieures (24) est inférieure à une qualité de surface des surfaces de retenue (23).
